(19) Europäisches Patentamt
European Patent Office
Office européen des brevets

(11) **EP 3 284 524 A1**

(12) **EUROPEAN PATENT APPLICATION**

(43) Date of publication:
**21.02.2018 Bulletin 2018/08**

(51) Int Cl.:
**B01D 9/00** (2006.01)  **C02F 1/22** (2006.01)
**C02F 1/52** (2006.01)

(21) Application number: **17153852.3**

(22) Date of filing: **30.01.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **16.08.2016 US 201615238298**

(71) Applicant: **Linde Aktiengesellschaft
80331 München (DE)**

(72) Inventor: **ASLAM, Naveed
Houston, TX Texas 77030 (US)**

(74) Representative: **Hofmann, Andreas et al
RGTH
Patentanwälte PartGmbB
Postfach 33 02 11
80062 München (DE)**

(54) **DRAFT TUBE CRYSTALLIZER**

(57) In order to overcome the limitations and problems that earlier apparatus have experienced, a crystallizer (1) is proposed, comprising a source of nitrogen, in particular of gaseous nitrogen (GAN) and/or of liquid nitrogen (LIN), said source of nitrogen being in fluid communication, in particular by a nozzle (6), with at least one connecting or draft tube (2: 7, 8, 9, 10) which is in fluid communication with a chamber (11), in particular holding a fluid, said chamber (11) being in fluid communication with a discharge pipe or discharge tube (13).

FIG. 1

EP 3 284 524 A1

## Description

### Technical field of the present invention

The present invention relates to a crystallizer.

### Technological background of the present invention

Hydraulic fracturing is becoming a desirable method for extracting hydrocarbons. However, this method is being given scrutiny by public and regulatory agencies due to their extensive requirement for and consumption of water.

This problem is exacerbated, for example in certain regions of the United States, because there is a water shortage to contend with. For example the Permian Basin in Texas is one such area so there is a continuous need for methods that use water more efficiently in the hydraulic fracturing operations.

Typically the produced water that is recovered is characterized by unusually high percentages of dissolved solids (TDS) in the range of 50,000 p[arts]p[er]m[illion] to 600,000 p[arts]p[er]m[illion] which makes these types of water not suitable for reverse osmosis units. Evaporative crystallization (EC) technologies are also not desirable due to their low efficiencies due to the heat of evaporation of water.

### Disclosure of the present invention: object, solution, advantages

Starting from the disadvantages and shortcomings as described above as well as taking the prior art as discussed into account, an object of the present invention is to overcome the limitations and problems that earlier apparatus have experienced.

This object is accomplished by a crystallizer comprising the features of claim 1. Advantageous embodiments, expedient improvements and other optional features of the present invention are set forth herein and disclosed in the respective dependent claims.

The present invention basically provides for a crystallizer for water reclamation, more particularly for a liquid nitrogen (LIN) based crystallizer and its use in reclaiming water from oil and gas produced water streams.

More particularly, a crystallizer for use in treating produced water is disclosed. The crystallizer is a combination of a source of nitrogen in fluid communication with at least one connecting or draft tube which is in fluid communication with a chamber which is in fluid communication with a discharge pipe or discharge tube. The produced water from an oil and gas operation is fed into the crystallizer which will separate out contaminants from the water producing fresh water.

In one embodiment of the present invention, there is disclosed a crystallizer comprising: a source of nitrogen in fluid communication with at least one connecting or draft tube which is in fluid communication with a chamber which is in fluid communication with a discharge pipe or discharge tube.

According to an advantageous embodiment of the present invention, the source of nitrogen can be both in the form of gaseous nitrogen (GAN) and/or in the form of liquid nitrogen (LIN) and can be from any readily adaptable supply source.

In an expedient embodiment of the present invention, the source of nitrogen may be a nozzle which will be in fluid communication with a first connecting or draft tube.

According to a favoured embodiment of the present invention, the at least one connecting or draft tube can be a plurality of connecting or draft tubes.

In a preferred embodiment of the present invention, a source of feedwater may be in fluid communication with the at least one connecting or draft tube, in particular with the first connecting or draft tube. The source of feedwater may supply the water that is to be treated by the crystallizer, said feedwater being for example produced water from an oil and gas operation.

According to an advantageous embodiment of the present invention, critical to the operation of the crystallizer may be, when a plurality of connecting or draft tubes is present that each successive connecting or draft tube may be greater in diameter than the connecting or draft tube preceding it in fluid communication with the source of feedwater and gaseous nitrogen (GAN).

This provides for the gaseous nitrogen (GAN), as it may rise, in particular together with the feedwater, through the at least one connecting or draft tube, in particular to change velocity and allow for the separation of crystals (ice versus salt).

In an expedient embodiment of the present invention, the gaseous nitrogen (GAN) may also provide agitation inside of the at least one connecting or draft tube.

According to a favoured embodiment of the present invention, salt crystals and ice crystals may separate in the at least one connecting or draft tube.

The at least one connecting or draft tube is in fluid communication with the chamber where the at least one connecting or draft tube will in particular be present in the chamber proper. The at least one connecting or draft tube may thereby terminate in the chamber.

In a preferred embodiment of the present invention, the chamber may be designed to hold a fluid such as the water that is being treated by the crystallizer.

According to an advantageous embodiment of the present invention, the terminating at least one connecting or draft tube may discharge water in the form of a water spray, in particular containing ice crystals, into the chamber, i.e. water may be sprayed from the connecting or draft tube into the chamber.

This water spray may help convert the ice crystals or slush that arrives at the terminating at least one connecting or draft tube and may convert these ice crystals or slush into fresh water which may be free of the contaminants that were present in the water when it was first fed to the at least one connecting or draft tube.

This fresh water may be recovered through a pipe that is present in the chamber where it can be reused in the oil and gas operation or for other uses.

The source of the gaseous nitrogen (GAN) and of the liquid nitrogen (LIN) may be air. For purposes of the present invention, the gaseous nitrogen (GAN) and/or the liquid nitrogen (LIN) may preferably be supplied on a movable compact skid through an installed tank. Alternatively, other inert gases such as carbon dioxide, helium and mixtures thereof can be used instead of nitrogen.

The nozzle is typically designed to avoid clogging while rapidly cooling and assisting in the crystallization of ice crystals from the water feed through the expansion of liquid nitrogen.

The crystallizer is typically 0.61 metres to 0.91 metres (two feet to three feet) in diameter and has a height of 1.83 metres to 2.44 metres (six feet to eight feet). Typically the number of connecting or draft tubes can vary by throughput requirement and can be two, four, or eight depending on the operator's desired throughput.

The flow of the gas may be continuous.

The successive increase in the diameter of the connecting or draft tubes is attributed in part based on the principles of terminal falling velocity of salt crystals and of ice crystals. The terminal falling velocity $U_{salt}$ crystal of salt crystals is represented by the following formula:

$$U_{salt\ crystal} = K_f * sqrt[(density_{salt\ crystal} - density_{nitrogen\ fluid}) / density_{nitrogen\ fluid}]$$

Here $K_f$ is the friction coefficient based on the drag and load factor of flows. The terminal falling velocity $U_{salt\ crystal}$ of a salt gives velocity of nitrogen gas flowing from the downward to the upward direction and at that velocity of nitrogen the salt crystal will be suspended in the up flowing stream of nitrogen thus attaining the balance in a flow stream.

If the nitrogen upwards velocity increases, the salt crystal will be carried out upward and if the velocity decrease, then this salt crystal will settle downwards due to the predominant effects of gravity being larger than the inertial effects of the flowing nitrogen stream.

Similarly for ice crystals, the following equation applies for the terminal falling velocity $U_{ice\ crystal}$ of ice crystals:

$$U_{ice\ crystal} = K_f * sqrt[(density_{ice\ crystal} - density_{nitrogen\ fluid}) / density_{nitrogen\ fluid}]$$

This provides the equilibrium velocity of nitrogen to stabilize the ice crystals in an upwards flow.

On average, the density of salt crystals could be taken at 2.71 g/cm$^3$ and density of ice crystals at 0°C could be taken at 0.9167 g/cm$^3$. So for a given fluid load and system and fluid friction effects, the terminal velocity of salt crystals will be larger than ice crystals.

Therefore, the diameter of a connecting or draft tube can be calculated as follows:

$$diameter = sqrt(4*A/3.1415) = volumetric\ flow\ rater\ of\ fluid/terminal\ falling\ velocity.$$

As such, in the case of salt crystals, the cross-sectional area and hence the diameter of the tube will be smaller compared to ice crystals for achieving the equilibrium in the upwards nitrogen flow. This principle is exploited to achieve the separation between the salt and the water. At the bottom of the connecting or draft tube, the diameters are smaller and configured in such a way that the salt crystals settle down from the nitrogen flow, while the water crystals are carried upwards.

In addition to having a gross separation between the salt and water crystals, this device could also be designed to achieve the separation between different salts due to the differences in their densities thus getting relatively pure salts which could be recovered, in particular from the at least one connecting or draft tube, and sold in the open market.

This design of a tapered connecting or draft tube provides a lower capital expenditures (CapEx) and operating expenditures (OpEx) option for separating salt crystals from water wherein the same fluid, i.e. nitrogen which is used to create the crystallization effect is also utilized to achieve separation between different salts and water crystals.

This design addresses the difficulties previously encountered with E[utectic]F[reeze]C[rystallization] based crystallizer due to having to separate unit operations for salt-water crystal separations and the necessary energy required to achieve such separation.

The various components of the crystallizer unit could be made from plastics or polymeric materials or ordinary steel coated with fluoro polymers. Since this is a low temperature design for water reclamation there is little likelihood of scaling and fouling effects and therefore the unit does not require more expensive material further lowering the overall capital expenditures (CapEx) for the unit.

Previous attempts at commercialization of indirect crystallizers to treat high total dissolved solids water were less successful due to the high capital expenditures (CapEx) and operating expenditures (OpEx) involved in the separation of ice and salt crystals as well as the cooling loop and refrigerant compressor design.

The present invention avoids these difficulties because the separation of ice and salt is performed in the same unit using the same fluid thereby lowering capital expenditures (CapEx) and operating expenditures (OpEx) by intensifying energy but also mass exchange in one unit.

Further the crystallizer of the present invention has a lower energy requirement compared to distillation or evaporative crystallizers as the latent heat of fusion of ice is only one seventh that of the latent heat of vaporization.

The lower operating temperatures further result in minimizing scaling and corrosion effects from the water present in the crystallizer chamber. This allows the operator to use lower cost materials of construction.

The high surface area by the direct contact between the produced water and liquid nitrogen results in a greater heat transfer coefficient.

The design per the present invention allows for no pretreatment of the produced water before being treated in the crystallizer.

The present invention further provides for the recovery of salts in near pure form allowing for their reuse or sale for use in other applications.

The present invention provides for a modular and movable crystallizer allowing for the unit to be moved to where there is a need to treat produced water.

The present invention further provides a high turn down ratio or TDR. This reflects the maximum capacity to minimum capacity in terms of flow so a unit with good TDR is desirable as when the feed flow changes the unit can adjust and still perform the desired work without upset the operability of the unit.

**Brief description of the drawings**

For a more complete understanding of the present embodiment disclosures and as already discussed above, there are several options to embody as well as to improve the teaching of the present invention in an advantageous manner. To this aim, reference may be made to the claims dependent on claim 1; further improvements, features and advantages of the present invention are explained below in more detail with reference to particular and preferred embodiments by way of non-limiting example and to the appended drawing figures taken in conjunction with the following description of exemplary embodiments, of which:

FIG. 1     is a schematic of a crystallizer according to the present invention; and

FIG. 2     is a schematic of the interaction of two or more crystallizers according to the present invention.

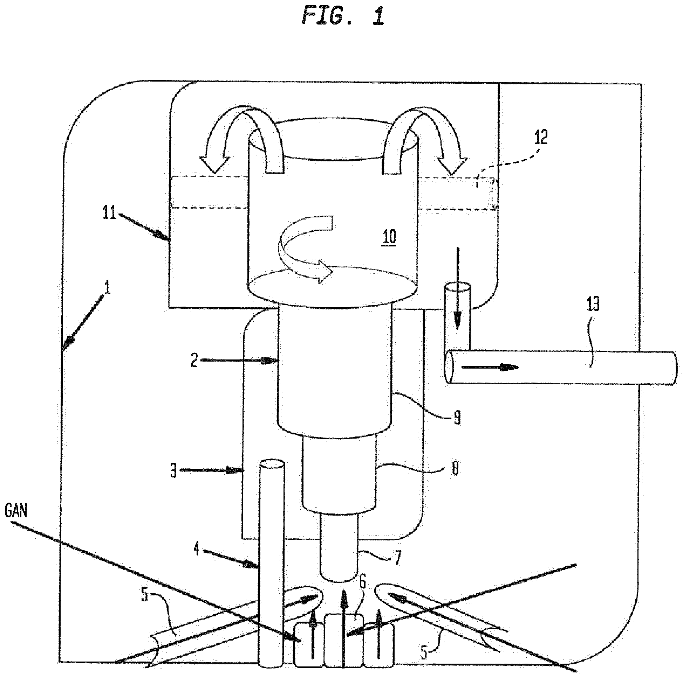

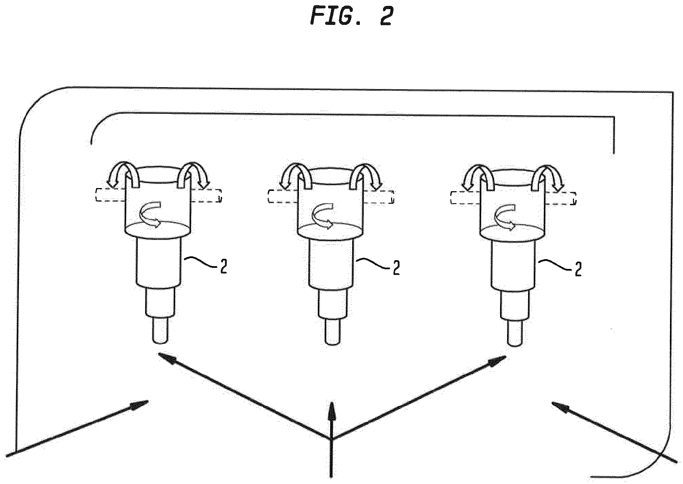

In the appended drawing figures, like equipment is labelled with the same reference signs throughout the description of FIG. 1 and FIG. 2.

**Detailed description of the drawings; best way of embodying the present invention**

Before explaining the inventive embodiments in detail, it is to be understood that the present invention is not limited in its application to the details of construction and arrangement of parts illustrated in the accompanying drawings, since the present invention is capable of other embodiments and being practiced or carried out in various ways. Also, it is to be understood that the phraseology or terminology employed herein is for the purpose of description and not of limitation.

In the description above and below, terms such as horizontal, upright, vertical, above, below, beneath and the like, are used solely for the purpose of clarity illustrating the present invention and should not be taken as words of limitation. The drawings are for the purpose of illustrating the present invention and are not intended to be to scale.

FIG. 1 is a schematic of an embodiment of the present invention and reference sign 1 shows a low-energy, direct contact crystallizer that can be employed for reclaiming produced water.

The main crystallizer housing 1 is designed to crystallize the incoming produced water stream 5 into salt and ice crystals through the use of a cryogenic fluid such as liquid nitrogen 6. The crystallizer 1 will also separate the salt and water crystals through a multi-diameter connecting or draft tube 2 from the top of the connecting or draft tube 2 to a chamber 11 where through a water spray 12 the crystals are converted into fresh water stream and this reclaimed water stream is removed through discharge pipe 13.

Liquid nitrogen (LIN) and gaseous nitrogen (GAN) are both fed through line 6. They both provide cooling required for the eutectic freeze crystallization (EFC) of the produced water. The gaseous streams also provide energy required for agitation and through the multi-diameter connecting or draft tube 2 provides separation of water crystals from salt solution and salt crystals.

As such, three effects are achieved, namely heat transference, inducing agitation and separation without a pump or agitator motor being present.

The connecting or draft tube 2 is divided into several sections of increasing diameter as the flow of fluid progresses upwards. The LIN and/or GAN are fed through nozzle 6 into connecting or draft tube 7 which is fluidly connected to nozzle 6.

Connecting or draft tube 7 is fluidly connected to connecting or draft tube 8 which is larger in diameter than connecting or draft tube 7.

Connecting or draft tube 8 fluidly connects to connecting or draft tube 9 which is greater in diameter than connecting or draft tube 8.

For purposes of FIG. 1, connecting or draft tube 9 fluidly connects to connecting or draft tube 10 which is larger in diameter than connecting or draft tube 9.

As the GAN rises through the connecting or draft tube 2 which comprises the connecting or draft tubes 7, 8 and 9, its velocity changes and decreases because of the increase in diameter through the respective connecting or draft tubes.

This decrease in velocity will lead to a separation in the crystals formed (ice crystals versus salt crystals) and the ice crystals, being lighter will require a lower terminal falling velocity. The salt crystals being heavier will require a higher terminal falling velocity.

So as the GAN rises along the connecting or draft tube 2, the heavy crystals of salt will settle down and the lighter ice crystals will be directed to the spray chamber 11 where they are sprayed with a portion of the portion of fresh water and withdrawn as reclaimed water stream 13.

The nozzle 6 is designed to fluidly connect to the first connecting or draft tube 7 and to feed either or both GAN and LIN to the connecting or draft tube 7. Feedwater is also fed to connecting or draft tube 7 through line 5 which is shown as two separate feed lines in fluid communication with connecting or draft tube 7.

This feedwater through line 5 can be the water that is going to be subject to treatment such as the produced water from an oil and gas operation.

A chamber 3 is present to collect the salt crystals. Pipe 4 which is present in the bottom of chamber 3 will assist in removing the salt crystals out of the crystallizer.

FIG. 2 is a schematic representation of more than one crystallizer working in conjunction with each other. This schematic simply shows the crystallizer as described with respect to the description of FIG. 1 and particularly the connecting or draft tube 2 for three crystallizers.

This demonstrates that the present invention can address greater flow rates by increasing the number of connecting or draft tube assemblies to two or three depending upon the increased flow rate. This also allows for the present invention to be similar to traditional membrane based reverse osmosis units for flow rates.

It will be understood that the embodiments described herein are merely exemplary, and that one skilled in the art may make variations and modifications without departing from the spirit and scope of the present invention. All such variations and modifications are intended to be included within the scope of the present invention as described and claimed herein. Further, all embodiments disclosed are not necessarily in the alternative, as various embodiments of the present invention may be combined to provide the desired result.

**List of reference signs**

1    crystallizer, in particular low-energy, direct contact crystallizer
2    connecting or draft tube, in particular multi-diameter connecting or draft tube
3    chamber for collecting salt crystals

4     line or pipe or tube at the bottom of chamber 3

5     line or pipe or tube for feedwater, in particular for incoming produced water stream

6     nozzle of line or of pipe or of tube for liquid nitrogen (LIN) and gaseous nitrogen (GAN)

7     connecting or draft tube

8     connecting or draft tube having larger diameter than connecting or draft tube 7

9     connecting or draft tube having larger diameter than connecting or draft tube 8

10    connecting or draft tube having larger diameter than connecting or draft tube 9

11    chamber, in particular spray chamber

12    water spray

13    line or pipe or tube for discharging reclaimed water stream

**Claims**

1. A crystallizer (1) comprising a source of nitrogen, in particular of gaseous nitrogen (GAN) and/or of liquid nitrogen (LIN), said source of nitrogen being in fluid communication, in particular by a nozzle (6), with at least one connecting or draft tube (2: 7, 8, 9, 10) which is in fluid communication with a chamber (11), in particular holding a fluid, said chamber (11) being in fluid communication with a discharge pipe or discharge tube (13).

2. The crystallizer according to claim 1 wherein the at least one connecting or draft tube (2) is a plurality of connecting or draft tubes (7, 8, 9, 10).

3. The crystallizer according to claim 2 wherein each successive connecting or draft tube (8; 9; 10) is greater in diameter than the connecting or draft tube (7; 8; 9) preceding it.

4. The crystallizer according to at least one of claims 1 to 3 wherein a source of feedwater is in fluid communication (5) with the at least one connecting or draft tube (2: 7, 8, 9, 10).

5. The crystallizer according to claim 4 wherein the feedwater is produced water from an oil and gas operation.

6. The crystallizer according to claim 4 or 5 wherein the feedwater and the gaseous nitrogen (GAN) rise through the at least one connecting or draft tube (2: 7, 8, 9, 10).

7. The crystallizer according to at least one of claims 1 to 6 wherein the gaseous nitrogen (GAN) changes velocity when rising through the at least one connecting or draft tube (2: 7, 8, 9, 10).

8. The crystallizer according to at least one of claims 1 to 7 wherein the nitrogen provides agitation inside of the at least one connecting or draft tube (2: 7, 8, 9, 10).

9. The crystallizer according to at least one of claims 1 to 8 wherein salt crystals and ice crystals separate in the at least one connecting or draft tube (2: 7, 8, 9, 10).

10. The crystallizer according to at least one of claims 1 to 9 wherein the at least one connecting or draft tube (2: 7, 8, 9, 10) is present in the chamber (11).

11. The crystallizer according to at least one of claims 1 to 10 wherein water (12), in particular containing ice crystals, is sprayed from the at least one connecting or draft tube (2: 7, 8, 9, 10) into the chamber (11).

12. The crystallizer according to at least one of claims 1 to 11 wherein the discharge pipe or discharge tube (13) discharges water.

13. The crystallizer according to at least one of claims 1 to 12 wherein salts are recovered from the at least one connecting or draft tube (2: 7, 8, 9, 10).

14. The crystallizer according to at least one of claims 1 to 13 wherein the crystallizer (1) is mounted on a skid, in particular mounted on a vehicle.

15. The crystallizer according to at least one of claims 1 to 14 wherein the flow of nitrogen is continuous.

# FIG. 1

12

11

1

2

10

13

9

3

8

GAN

4

7

6

5

5

# FIG. 2

Europäisches
Patentamt

European
Patent Office

Office européen
des brevets

# EUROPEAN SEARCH REPORT

Application Number

EP 17 15 3852

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 455 243 A2 (UNION CARBIDE IND GASES TECH [US]) 6 November 1991 (1991-11-06) * claims 1-23; figure 1 * | 1,4-10, 13-15 | INV. B01D9/00 C02F1/22 C02F1/52 |
| X | US 3 378 236 A (TATUSI KASAI) 16 April 1968 (1968-04-16) * claim 1; figure 2 * | 1-3, 12-14 | |
| A | US 3 364 690 A (TOROBIN LEONARD B) 23 January 1968 (1968-01-23) * claims 1-13; figure 1 * | 1-15 | |
| A | EP 0 878 231 A1 (SHELL INT RESEARCH [NL]) 18 November 1998 (1998-11-18) * figure 2 * | 11 | |
| A | US 2011/319670 A1 (FETSKO STEPHEN W [US]) 29 December 2011 (2011-12-29) * paragraph [0019]; figure 1 * | 2,3 | |
| X | US 2006/047166 A1 (LIN ROBERT [US] ET AL) 2 March 2006 (2006-03-02) * paragraph [0028]; figure 3 * * paragraphs [0050], [0051] * * paragraph [0061] * | 1-10, 12-15 | TECHNICAL FIELDS SEARCHED (IPC) B01D C02F |

The present search report has been drawn up for all claims

| Place of search | Date of completion of the search | Examiner |
|---|---|---|
| Munich | 4 July 2017 | García Alonso, Nuria |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 15 3852

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2017

| Patent document cited in search report | | Publication date | Patent family member(s) | | | Publication date |
|---|---|---|---|---|---|---|
| EP 0455243 | A2 | 06-11-1991 | BR | 9101772 | A | 17-12-1991 |
| | | | CA | 2041676 | A1 | 04-11-1991 |
| | | | DE | 69107110 | D1 | 16-03-1995 |
| | | | DE | 69107110 | T2 | 14-09-1995 |
| | | | EP | 0455243 | A2 | 06-11-1991 |
| | | | ES | 2067791 | T3 | 01-04-1995 |
| | | | JP | H0817884 | B2 | 28-02-1996 |
| | | | JP | H04227802 | A | 17-08-1992 |
| US 3378236 | A | 16-04-1968 | CH | 477896 | A | 15-09-1969 |
| | | | DE | 1519915 | B1 | 30-04-1970 |
| | | | GB | 1161474 | A | 13-08-1969 |
| | | | US | 3378236 | A | 16-04-1968 |
| US 3364690 | A | 23-01-1968 | NONE | | | |
| EP 0878231 | A1 | 18-11-1998 | AR | 012676 | A1 | 08-11-2000 |
| | | | BR | 9801608 | A | 29-06-1999 |
| | | | EP | 0878231 | A1 | 18-11-1998 |
| | | | JP | H1128350 | A | 02-02-1999 |
| | | | TW | 457124 | B | 01-10-2001 |
| US 2011319670 | A1 | 29-12-2011 | BR | 112012033822 | A2 | 17-01-2017 |
| | | | CN | 102858418 | A | 02-01-2013 |
| | | | EP | 2585183 | A1 | 01-05-2013 |
| | | | JP | 2013537473 | A | 03-10-2013 |
| | | | KR | 20130090749 | A | 14-08-2013 |
| | | | TW | 201210681 | A | 16-03-2012 |
| | | | US | 2011319670 | A1 | 29-12-2011 |
| | | | US | 2013178660 | A1 | 11-07-2013 |
| | | | WO | 2011162952 | A1 | 29-12-2011 |
| US 2006047166 | A1 | 02-03-2006 | BR | PI0514767 | A | 24-06-2008 |
| | | | CA | 2576323 | A1 | 16-03-2006 |
| | | | CN | 101031538 | A | 05-09-2007 |
| | | | EP | 1861350 | A2 | 05-12-2007 |
| | | | TW | 200621702 | A | 01-07-2006 |
| | | | US | 2006047166 | A1 | 02-03-2006 |
| | | | WO | 2006028773 | A2 | 16-03-2006 |

EPO FORM P0459

For more details about this annex : see Official Journal of the European Patent Office, No. 12/82